(19) Europäisches Patentamt

European Patent Office

Office européen des brevets

(11) Publication number: **0 043 628**
**B1**

(12) **EUROPEAN PATENT SPECIFICATION**

(45) Date of publication of patent specification: **09.01.85**

(21) Application number: **81200757.3**

(22) Date of filing: **02.07.81**

(51) Int. Cl.⁴: **B 62 D 13/02, B 60 P 3/22,
B 62 D 53/06**

(54) **Vehicle.**

(30) Priority: **03.07.80 NL 8003857**

(43) Date of publication of application:
**13.01.82 Bulletin 82/02**

(45) Publication of the grant of the patent:
**09.01.85 Bulletin 85/02**

(84) Designated Contracting States:
**AT BE CH DE FR GB IT LI LU NL SE**

(56) References cited:
**DE-A-2 407 605
DE-B-1 099 366
FR-A-1 554 499
FR-A-2 124 948
NL-A-7 805 646
US-A-1 911 335
US-A-2 223 436
US-A-2 325 609
US-A-2 764 424
US-A-3 338 592
US-A-3 690 698**

(73) Proprietor: **Welgro B.V.
Parallelweg 18
NL-7141 DC Groenlo (NL)**

(72) Inventor: **Wellink, Theodorus Antonius
No. 1, Hobbemastraat
NL-7141 XD Groenlo (NL)**

(74) Representative: **Cammel, Willem Frans et al
OCTROOIBUREAU ARNOLD & SIEDSMA No. 1,
Sweelinckplein
NL-2517 GK The Hague (NL)**

Courier Press, Leamington Spa, England.

## Description

The invention relates to a vehicle according to the preamble of claim 1.

Such a vehicle is known from DE—B— 1 099 366. The steering mechanism requires a large space in the area of the engaging hinge, as a result of which the superstructure and hence the center of gravity of the loaded vehicle are at a high level, which is detrimental to the stability of the vehicle. Moreover, a high passage inherent to a high superstructure is inconvenient.

The invention has for its object to improve the stability of the vehicle. According to the invention this is achieved by the measure according to the characterizing part of claim 1. The engaging arm of the steering means on the bogie is enlarged so that this bogie is better retained in the steered position, which is of positive influence to the stability. Moreover, space is thus created between the wheels for disposing parts fixed to the chassis, so that a superstructure, for example, a tank can be arranged at a lower level. As a result the centre of gravity of the loaded vehicle will lie at a lower level and the superstructure can be lower or else for the same height of passage a superstructure of larger volume per running metre can be formed.

The invention relates in particular to a vehicle in the form of a semi-trailer for transporting bulk material, for example, flour, fodder and the like, in which a sequence of discharge funnels open out in a common discharge conduit extending in the medium longitudinal plane of the vehicle and in which at least one discharge funnel is disposed above an axle. This delivery funnel can extend through the rotary crown of an axle system, whereas the delivery conduit extends below the rotary crown.

The invention will be described more fully hereinafter with reference to some preferred embodiments.

In the drawing show schematically:

Figs. 1, 7, 11, 12, 13, 14 and 15 each a plan view of a tractor-semi-trailer combination, the trailer being constructed in the form of a vehicle embodying the invention,

Fig. 2 an enlarged plan view of the semi-trailer of Fig. 1, parts being broken away,

Fig. 3 an enlarged, perspective view of the semi-trailer of Fig. 1,

Fig. 4 a sectional view taken on the line IV—IV of Fig. 2,

Fig. 5 an enlarged, perspective view of detail V of Fig. 4,

Fig. 6 an enlarged sectional view taken on the line VI—VI in Fig. 4,

Figs. 8 and 10 each on a reduced scale a different axle system of a variant of the semi-trailer embodying the invention,

Fig. 9 a side elevation of part of a semi-trailer comprising the axle system of Fig. 8,

Fig. 16 a partial side elevation of a different axle system of a further vehicle embodying the invention,

Fig. 17 a sectional view taken in the direction of the arrow XVII—XVII in Fig. 16,

Fig. 18 a sectional view taken in the direction of the arrow XVIII—XVIII in Fig. 17.

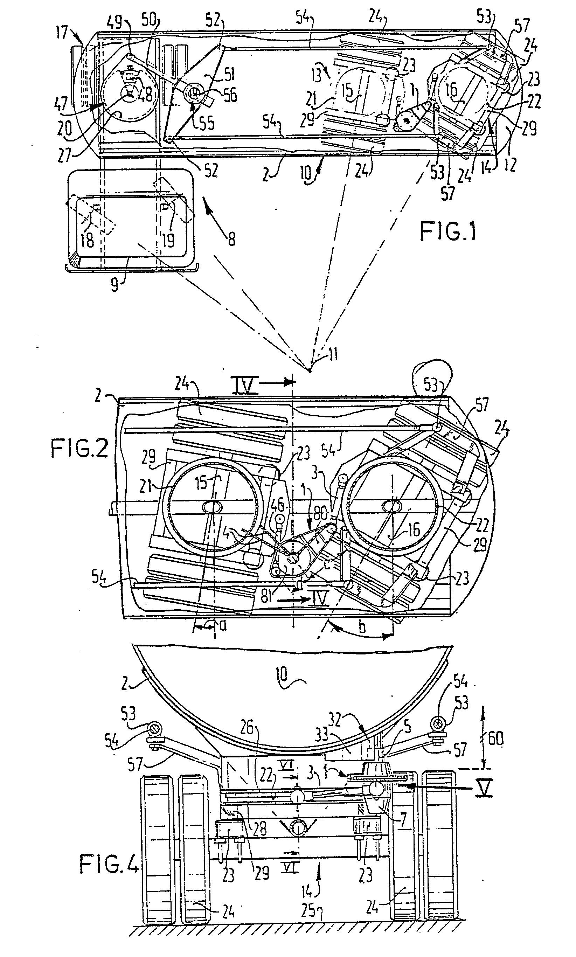

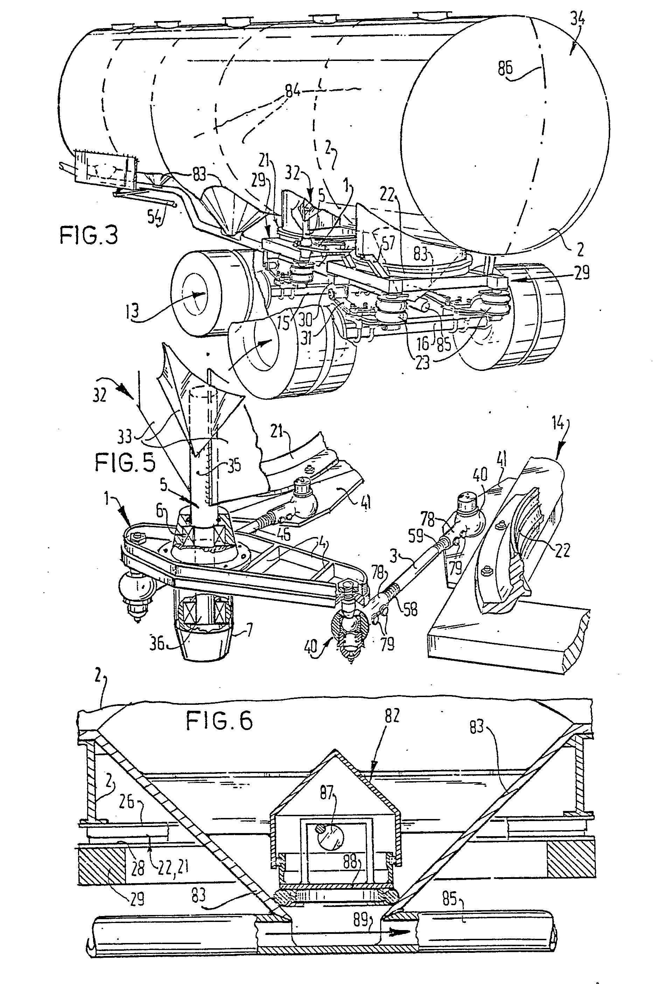

The tractor-semi-trailer combination 8 of Fig. 1 comprises a tractor 9 and a semi-trailer 10, which travels in Fig. 1 through a bend having point 11 as a centre of rotation. The rear end 12 of the semi-trailer 10 bears on a first axle system 13 and on a second axle system 14 arranged behind the former, the axles 15 and 16 of which are directed to point 11 in travelling through a bend, like the rear axle 17 and the wheel axles 18 and 19 of the tractor 9. The semi-trailer 10 is rotatable about the shaft 20 when bearing on the tractor 9. The chassis 2 of the semi-trailer 10 bears through rotary crowns 21 and 22 and air springs 23 on the axles 15 and 16, which in turn, bear on the ground through wheels 24. The top ring 26 of each rotary crown 21 and 22 is rigidly secured to the chassis 2, whereas the bottom ring 28 of each rotary crown 21 and 22 is rigidly secured to a frame 29 of an axle system 13 and 14 respectively. On each side of each frame 29 a pivot arm 31 is rotatably connected at its front end with a console 30, which is secured to the frame 29 (see Fig. 3). The pivot arm 31 bears on the axle 15, 16 and at the rear end of the pivot arm 31 an air spring 23 is arranged between the pivot arm 31 and the frame 29 in a manner such that the chassis 2 bears on the axles 15 and 16 through the rotary crowns 21 and 22, the frames 29, the air springs 23 and the pivot arms 31. The air springs 23 are provided with a control-system known *per se* for adjusting the air pressure in the springs 23 in dependence upon the load.

The semi-trailer 10 is disposed in a conventional manner on the tractor 9 by means of a coupling plate 27 with the aid of a so-called "king pin" and a guard weight 48, the coupling plate 27 being fastened to the semi-trailer 10 by means of a rotary crown 47. The coupling plate 27 constitutes a steering element, which pivotally engages an arm by means of a hinge 49 and a sliding rod 50, which slidably engages a transverse lever 51, which extends to near each of the two sides of the semi-trailer 10 and which is pivotally connected at said place by means of a ball-and-socket joint with a coupling rod 54, which extends above the level of the wheels 24 at the side of the tank 34 to the rear to a ball-and-socket hinge 53 of the hindmost axle system 14. The transverse lever 51 is pivotally journalled by means of a rotary track 55 on a console 56 of the semi-trailer 10.

In the position shown in Fig. 1 the tractor 9 can turn still further with respect to the semi-trailer 10, whereas the axle systems 13 and 14 remain in a substantially extreme position of deflection owing to the sliding joint between the sliding rod 50 and the transverse lever 51. On each of the two sides of the semi-trailer 10 is arranged an engaging hinge 53 on a console 57 extending upwardly and outwardly with respect to the frame 29 of the hindmost axle system 14 so that said hinge 53 is located on the axle system 14 beyond the rotary crown 22 and at a level 60 above the wheels 24. In this way first the hindmost axle system 14 is steered from the tractor 9. The foremost axle system 13 is controlled by the hindmost axle system 14. For this purpose an intermediate lever 1 is arranged between the two axle systems 13 and 14 on one side of the semi-trailer 10 and is pivotally journalled on the chassis 2 so as to extend substantially in the direction of length of the semi-trailer 10. This intermediate lever 1 is coupled by means of a coupling rod 3 extending transversely thereof with the rotatable, hindmost axle system 14 and through a coupling rod 46 extending transversely of the intermediate lever 1 it controls the foremost axle system 13 through a smaller steering angle $a$ than its own steering deflection $b$, since the hindmost intermediate lever arm 80 has a length $c$, which materially exceeds the length $d$ of the foremost intermediate lever arm 81. The lengths $c$ and $d$ of the intermediate lever arms 80 and 81 are proportioned in accordance with the required ratio between the turning angles $b$ and $a$ of the axle systems 14 and 13 respectively. The ratio between the lengths $c$ and $d$ of the intermediate lever arms 80 and 81 is in Figs. 1 to 5 equal to the ratio between the turning angles $b$ and $a$, since the further lever lengths, which might affect the relative steering deflections, are equal to one another. Said ratio may be 2:1. The intermediate lever 1 is stiffened by ribs 4 and is firmly journalled on the chassis 2 by means of a shaft 5 fastened to the intermediate lever 1 and being supported at the lower end 36 through ball bearings 6 and bearing housings 7 in the intermediate lever 1 and forming part at the top end 35 of a console 32, which is firmly connected through welding plates 33 with the chassis 2 consisting of a tank 34. The coupling rods 46 and 3 engage through a spherical hinge 40 the intermediate lever 1 and an extension 41 of the axle systems 13 and 14 respectively. Their length is adjustable, since they are screwed into sleeves 78 by left hand screwthread 58 and right hand screwthread 59 and fixed thereon by bolts 79.

The invention is particularly important for a vehicle comprising a row of compartments 84 for transporting bulk material such as flour, lump fodder and the like, in which the discharge funnels 83 of the compartments 84 open out in a common delivery conduit 85 arranged in the medium, longitudinal plane 86 of the chassis 2. In each rotary crown 21, 22 a discharge funnel 83 may be arranged. The delivery conduit 85 extending below the rotary crowns 21 and 22 does not collide with the steering means i.e. the intermediate lever 1 and the coupling rods 46, 3 and 56. Each discharge funnel 83 comprises at a fixed angle 82 a valve 88 of known type that can be lifted by means of a control-member 87, which valve allows the bulk material to pass, when air is blown by a blower (not shown) in the direction of the arrow 89 through the delivery conduit 85.

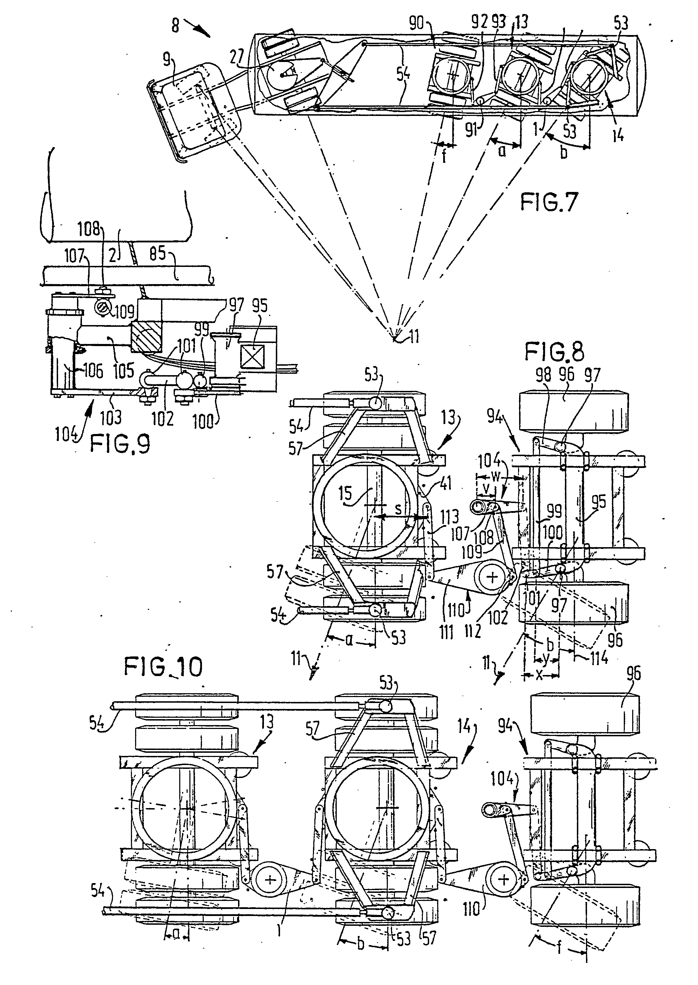

The tractor-semi-trailer combination 8 of Fig. 7 comprises, in front of the foremost axle system 13, a third axle system 90, which is steered by means of a second intermediate lever 91, a coupling rod 92 and a coupling rod 93 through a smaller steering deflection $f$ than the steering deflection $a$ from the axle system 14. In particular, the superstructure of the semi-trailer 10 can start at a low level, since the foremost axle system 13 of Fig. 1 and 90 of Fig. 7 are coupled with the coupling plate 27 through coupling rods 54 located on the outer side and at a high level rather than by means of a so-called triangle located centrally below the superstructure.

The vehicle, only the characteristic part of which is shown in Figs. 8 and 9, comprises a front axle system 13 which controls a second axle system 94 arranged behind the former and consisting of a fixed axle 95 with two pivot-pin-controlled wheels 96. The pivot arms 98 and 100 fastened to the wheels 96 and adapted to turn about pivot pins 97 with respect to the axle 95 are intercoupled by means of a track rod 99, whereas the pivot arm 100 engages, through ball hinges 101 and a coupling rod 102, a long lower arm 103 of an additional lever 104, the shaft 106 of which is journalled on a forwardly directed extension 105 of the chassis 2. A short upper arm 106 engages through a spherical hinge 108 a control-rod 109 of an intermediate lever 110 arranged at the side of the semi-trailer 10. The front arm 111 of the intermediate lever 110, which is materially longer than the rear arm 112 is coupled through a coupling rod 113 with the rotatable front axle system 13. The proportions of the lever arms of the intermediate lever 110 are again such that the axle 15 and the wheel axles 114 pass through the same centre of rotation, when the fork 42 performs a deflection, but here are taken into account the lengths of the lever arms s, v, w, x and y. In this embodiment the front axle system 13 is directly steered by means of coupling rods 54 from the tractor 9.

Fig. 10 shows an axle system for a vehicle embodying the invention, the front axle system 13 being coupled with the axle system 14 by means of an intermediate lever 1 described with reference to Figs. 1 to 5, the wheels 96 being steered from the axle system 94 by means of the intermediate lever 110 and a pitman lever 104 as described above with reference to Fig. 8. In this case the middle system of three axle systems is directly controlled by the coupling rods 54 from the tractor 9.

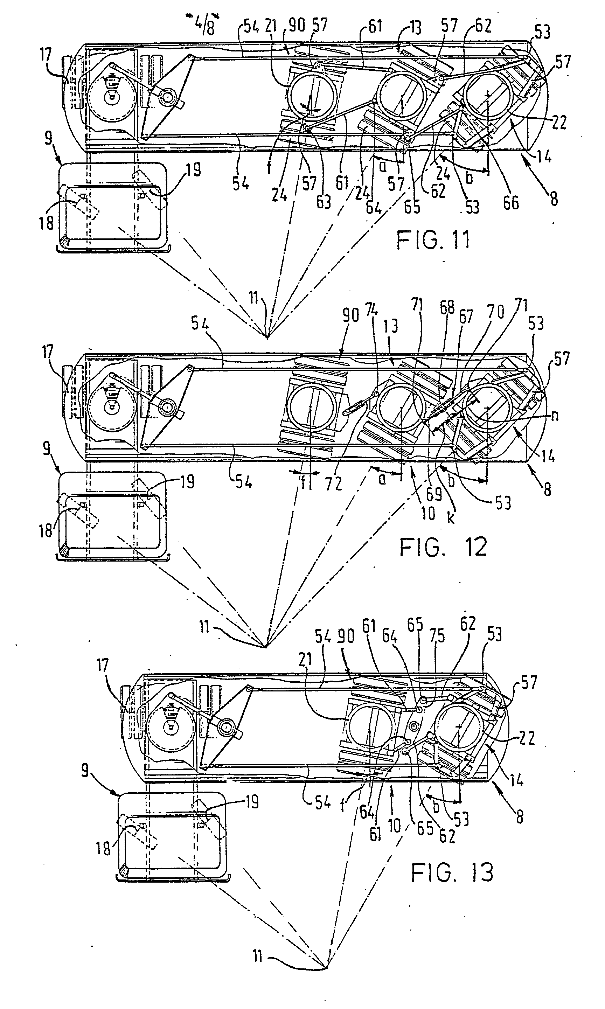

The semi-trailer 10 of Fig. 11 corresponds with that of Fig. 7, but the intermediate coupling levers 1 and 91 with transverse coupling rods 92, 93, 46 and 3 are replaced by coupling rods 61 and 62. It should be noted that only one coupling rod 54 is employed rather than a pair of coupling rods 54. This also applies to the pair of coupling rods 61 and the pair of coupling rods 62. The coupling rods 61 and 62 each engage an axle system 90, 13 and 13, 14 respectively, that is to say, an engaging hinge 63, 64, 65 and 66 respectively, which are arranged on a console 57 of the axle system concerned beyond the relevant rotating crown 21, 22 and above a level over the wheels 24. In order to direct the axle systems 90, 13 and 14 all to the common centre of rotation 11 the hinges 63 and 65 are located further to the outside than the hinges 64 and 66 in accordance with the required steering deflections.

It should be noted that the coupling rods 54, though not preferably, could engage the console of the medium or the front axle system 13 and 90 respectively rather than the rear axle system 14.

The semi-trailer 10 of Fig. 12 corresponds with that of Fig. 11, however, the coupling of the axle systems 13 and 90 with the axle system 14 is established here through an intermediate lever 67, which is pivotally journalled on a bearing element 68 rigidly secured to the chassis 2 and having two telescopic lever arms 69 and 70, each of which is coupled through a hinge 71 with an axle system 13 and 14 respectively. The distances $k$ and $n$ between the fulcrum of the intermediate lever 67 and the hinges 71 of the lever arms 69 and 70 respectively are proportioned in accordance with the required ratio between the deflection angles $a$ and $b$ of the axle systems 13 and 14 respectively. The axle system 90 is coupled with the axle system 13 through a sleeve rigidly secured to the axle system 13, in which a telescopic rod 72 is slidable, said rod being pivotally connected with the hinge 74 of the axle system 13. It may be considered to omit the axle system 90 in Fig. 12 and to then cause the coupling rods 54 to engage the front axle system 13.

Fig. 13 is distinguished from Fig. 11 in that an intermediate lever 75 rather than an axle system 13 is arranged between the axle systems 90 and 14. This intermediate lever 75 extends transversely of the direction of travel of the semi-trailer 10 and is connected by hinges 64 and 65 with coupling rods 61 and 62 in accordance with Fig. 11. Moreover, a third axle system may be coupled by means of such an intermediate lever 75 with an axle system 90 or 14.

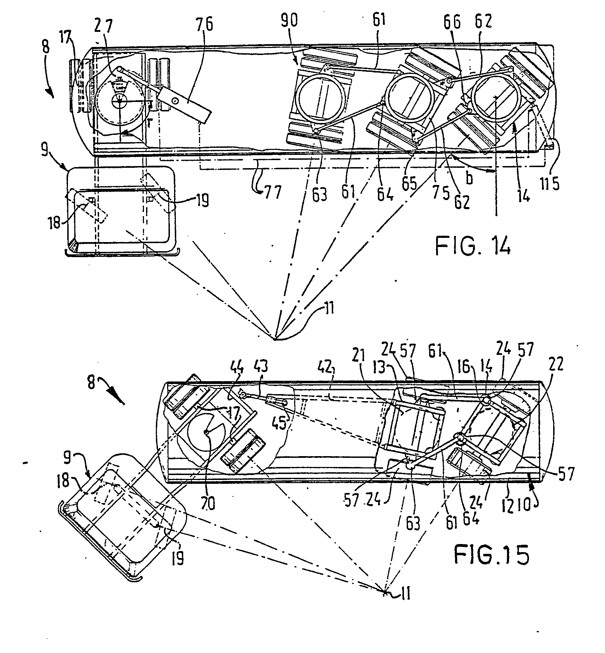

Referring to Fig. 14 the rear axle system 14 is controlled by means of a hydraulic coupling with the tractor deflection $r$. For this purpose the coupling plate 27 is pivotally connected with a hydraulic ram 76, chambers of which communicate through ducts 77 with chambers of a hydraulic ram 115, the required steering deflection $b$ being obtained by the choice of the diameter ratio of the rams 76 and 115. The coupling of the axle systems 90 and 14 with the intermediate lever 75 is obtained like in Fig. 11 by high-level coupling rods 61 and 62 engaging hinges 63, 64 and 65, 66 respectively arranged at a high level beyond the rotary crowns.

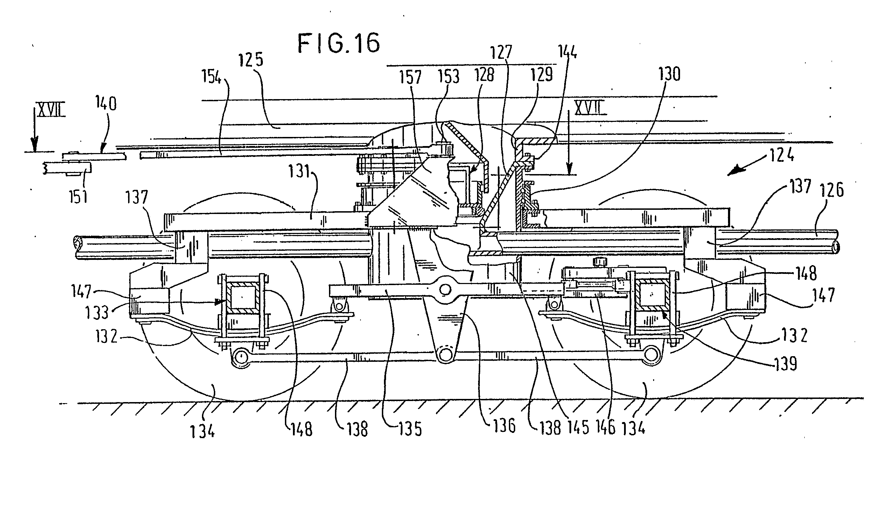

Fig. 15 shows a vehicle 8 with a semi-trailer 10 embodying the invention. The front axle system 13 thereof is coupled by means of a conventional fork 42 (also termed triangle) and a sliding rod 43 with the rear end 44 of the tractor 9. The coupling between the axle systems 13 and 14 is established by means of one or two coupling rods 61 engaging hinges 63 and 64, which are arranged on consoles 57 beyond the rotary crowns 21 and 22 respectively at a level above the wheels 24.

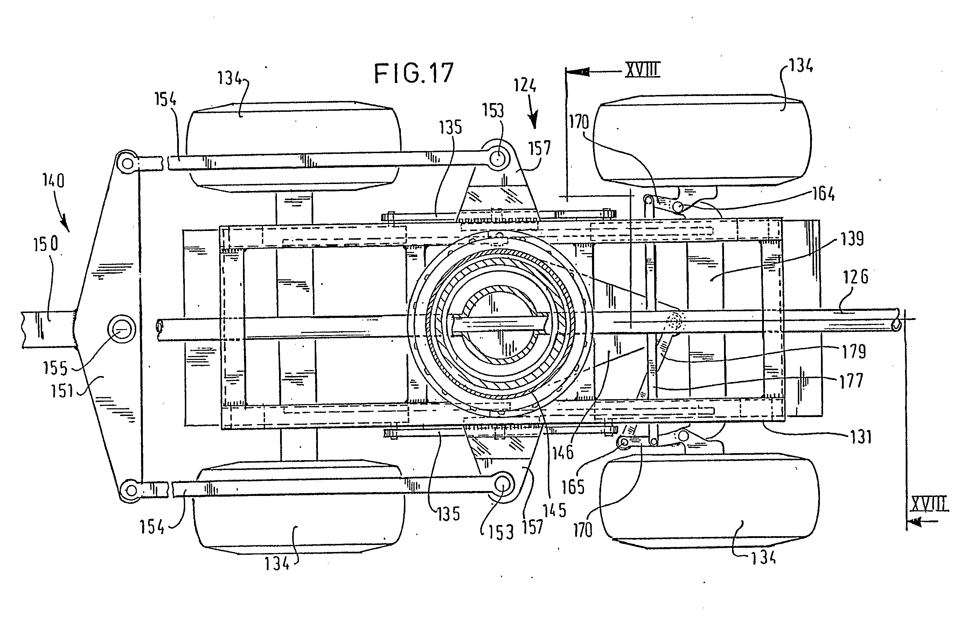

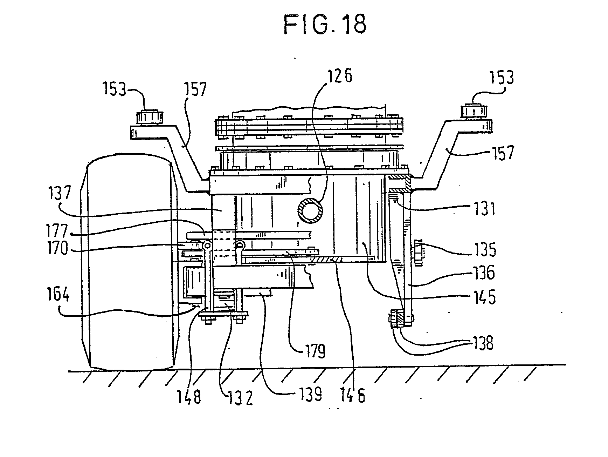

The bogie 124 of Figs. 16 to 18 comprises two axles 133, 139. The bogie 124 comprises a frame 131, which is mounted by means of a rotary crown 130 on a chassis formed by a tank 125. To this purpose the tank 125 is provided with a supporting frame 129 having a fastening flange. To this fastening flange 144 are coaxially mounted a discharge funnel 127 and a supporting column 145. This discharge funnel 127 opens out in a bulk delivery conduit 126. A valve 128 is arranged in the funnel 127. The frame 131 of the rotatable bogie 124 pivotally engages the supporting column 145 through a rotary crown 130. As is shown, the frame 131 partly extends above the bulk conduit 126.

The axles 133, 139 are arranged in a coupled tandem construction. The axles 133, 139 are resiliently mounted with the aid of leaf springs 132. The leaf springs 132 are each connected at one end with a spring support 147, which supports are fastened through a spacer 137 to the frame 131. At the other ends the leaf springs 132 are pivotally coupled with a supporting arm 135, which is pivoted in the middle to a support 136 rigidly secured to the frame 131. The axles 133, 139 are each connected by means of reaction arms 138 with the support 136. The spacers 137 bridge the height occupied by the bulk conduit 126 and thus provide space for the rotation of the bogie.

By coupling the axles 133, 139 in the manner shown, it is ensured that during the travel the forces acting on the wheels 134 of one axle and the resultant displacements are partly transferred to the other axle so that as a whole an improved spring effect is obtained.

The bogie 124 is controlled by means of a steering mechanism 140. This steering mechanism 140 comprises a transverse lever 151 connected by a hinge 155 to the chassis. This transverse lever 155 is coupled by means of a connecting rod 150 with the tractor of the vehicle. When the tractor swings with respect to the semi-trailer, the transverse lever 155 will also swing by means of the connecting rod 150 with respect to the trailer or the tank 125. The transverse lever 151 is coupled, at one end, through coupling rods 154 with consoles 157 rigidly secured to the frame 131 of the bogie 124. The coupling rods 154 engage engaging hinges 153 of the consoles 157. The consoles 157 are constructed so that the engaging hinges 153 are located beyond the rotary crown 130 and above the level of the wheels 134. The coupling rods 154 partly extend over the wheels 134.

In order to allow satisfactory backward drive of a semi-trailer provided with a bogie 124 the hindmost axle 139 viewed in the normal travelling direction, is constructed in the form of a swivel axle. The wheels 134 can turn by means of steering pivot pins 164 with respect to the frame 131. The steering pivots of the axle 139 carry steering pivot arms 170, which are intercoupled by means of a track rod 177. The deflection of the wheels 134 of the axle 139 with respect to the frame 131 is controlled by a steering rod 179, which is pivotally connected by means of steering balls 165 at one end with one of the steering pivot arms 170 and at the other end with an extension arm 146, which is integral with the supporting column 145. It will be apparent that the extension arm 146 is not movable with respect to the tank chassis 125.

When the bogie 124 is turned with the aid of the steering device 140 with respect to the chassis 125, the wheels 134 of the steering pivot axle 139 will thus be set at an angle to the frame 131. This steering mode of the steering pivot axle in dependence on the angle of deflection between the chassis 125 and the bogie 124 is necessary for the backward drive.

## Claims

1. A vehicle (8) comprising a chassis (2), the rear end (12) of which is supported via a rotary crown (21, 22, 130) by at least one steered axle system provided with wheels and having at least one hinge (53, 153) engaged by a coupling rod (54, 154) of a steering mechanism, said rod extending at a level above the wheels (24, 134) and substantially in the longitudinal direction of the vehicle, characterized in that the hinge (53, 153) is arranged at the axle system along a lateral side of the vehicle and in plan view outside of the rotary crown (21, 22, 130) and in that the coupling rod partly extends over the wheels (24, 134).

2. A vehicle (8) as claimed in claim 1 characterized in that it is constructed in the form of a semi-trailer (10) and comprises a tractor-controlled transverse lever (51) journalled on the chassis (2) so as to be pivotable about a vertical shaft in the medium, longitudinal plane of the semi-trailer, said lever (51) extending to near at least one side of the vehicle and being pivoted at said place to the coupling rod (54, 154) rearwardly extending to the engaging hinge (53, 153).

3. A vehicle as claimed in claim 2 characterized in that the transverse lever (51) is controlled through a steering element to be coupled with the tractor, said element pivotally engaging a sliding rod (50) which is slidable with respect to the transverse lever (51).

4. A vehicle as claimed in any one of the preceding claims characterized in that the engaging hinge (53, 153) is arranged on a console (57, 157) extending upwardly and outwardly with respect to an axle system frame (29, 131).

5. A vehicle as claimed in any one of the preceding claims characterized in that the axle system (124) comprises two axles (133, 139), the hindmost axle (139), viewed in the normal direction of travel, being a swivel axle and in that steering means comprising a steering rod (179) are provided for controlling the swivel axle (139) in dependence on the angle of turn of the bogie (124) with respect to the chassis (Figs. 16 and 17).

6. A vehicle as claimed in claim 5 characterized in that the steering rod (179) is coupled at one end with a point that is fixed in place (146) with respect to the chassis.

7. A vehicle as claimed in any one of the preceding claims characterized in that the rear end of the vehicle constructed in the form of a semi-trailer is supported by at least two steered axle systems (90, 13, 14), the hindmost one (14) being first steered from the tractor and the foremost axle system (90, 13) being controlled by the hindmost system through at least one coupling rod (61, 62) intercoupling said axle systems.

8. A vehicle as claimed in any one of the preceding claims characterized in that the rear end of the vehicle constructed in the form of a semi-trailer is supported by at least two steered axle systems which are intercoupled through an intermediate lever (1, 110) pivotally journalled on a bearing element (5) rigidly secured to the chassis.

9. A vehicle as claimed in any one of the preceding claims comprising a plurality of compartments (84) each having a discharge funnel (83) opening out in a common delivery conduit (85) characterized in that at least one discharge funnel (83) extends across a rotary crown (22) of an axle system and in that the common delivery conduit (85) extends substantially in the medium, longitudinal plane of the vehicle.

10. A vehicle as claimed in claim 9, characterized in that the common delivery conduit (85) extends below the rotary crown (22).

## Revendications

1. Un véhicule (8) comprenant un châssis (2) dont l'extémité arrière (12) est supporté par l'intermédiaire d'une couronne de rotation (21, 22, 130) par au moins un système d'essieu dirigé muni de roues et par au moins une articulation (53, 153) attaquée par une bielle d'accouplement (54, 154) d'un mécanisme de direction, ladite bielle s'étendant à un niveau situé au-dessus des roues (24, 134) et à peu près dans la direction longitudinale du véhicule, caractérisé en ce que l'articulation (53, 153) est agencée au niveau du système d'essieu, le long d'un côté latéral du véhicule et, dans une vue en plan, à l'extérieur de la couronne de rotation (21, 22, 130) et en ce que la bielle d'accouplement s'étend partiellement au-dessus des roues (24, 134).

2. Un véhicule (8) comme revendiqué dans la revendication 1, caractérisé en ce qu'il est construit sous la forme d'une semi-remorque (10) et comprend un levier transversal (51) commandé par le tracteur, tourillonnant sur le châssis (2) de manière à pouvoir pivoter autour d'un arbre vertical dans le plan médian longitudinal de la semi-remorque ledit levier (51) s'étendant à proximité d'au moins un côté du véhicule et étant articulé à cet endroit à une bielle d'accouplement (54, 154) s'étendant vers l'arrière jusqu'à l'articulation de coopération (53, 153).

3. Un véhicule (8) comme revendiqué dans la revendication 2, caractérisé en ce que le levier transversal (51) est commandé par l'intermédiaire d'un élément de direction destiné à être accouplé au tracteur, ledit élément coopérant de manière pivotant avec une bielle coulissante (50) qui peut coulisser par rapport au levier transversal (51).

4. Un véhicule comme revendiqué dans une quelconque des revendications précédentes, caractérisé en ce que l'articulation de coopération (53, 153) est agencée sur une console (57, 157) qui s'étend vers le haut et vers l'extérieur par rapport à un cadre de système d'essieu (29, 131).

5. Un véhicule comme revendiqué dans une quelconque des revendications précédentes, caractérisé en ce que le système d'essieux (124) comprend deux essieux (133, 139), l'essieau extrême arrière (139), vu dans le sens normal de la marche, étant un essieu orientable et en ce que des moyens de direction comprenant une barre de direction (179) sont prévues pour commander l'essieu orientable (139) en fonction de l'angle de rotation du bogie (124) par rapport au châssis (Fig. 16 et 17).

6. Un véhicule comme revendiqué dans la revendication 5, caractérisé en ce que la barre de direction (179) est accouplée à une extrémité à un point qui est fixe en position (146) par rapport au châssis.

7. Un véhicule comme revendiqué dans une quelconque des revendications précédentes, caractérisé en ce que l'extrémité arrière du véhicule, construit sous la forme d'une semi-remorque, est supportée par au moins deux systèmes d'essieux dirigés (90, 13, 14), l'essieu arrière (14) étant dirigé en premier à partir du tracteur et le système d'essieu extrême avant (90, 13) étant commandé par le système d'essieu extrême arrière par l'intermédiaire d'au moins une barre d'accouplement (61, 62) qui accouple lesdits systèmes d'essieux l'un à l'autre.

8. Un véhicule comme revendiqué dans une quelconque des revendications précédentes, caractérisé en ce que l'extrémité arrière du véhicule construit sous la forme d'une semi-remorque est supportée par au moins deux essieux dirigés qui sont accouplés entre eux par l'intermédiaire d'un levier intermédiaire (1, 110) tourillonnant sur un élément de portée (5) fixé rigidement au châssis.

9. Un véhicule comme revendiqué dans une quelconque des revendications précédentes, comprenant plusieurs compartiments (84) dont chacun présente une trémie de déchargement (83) qui débouche dans un conduit de sortie commun (85) caractérisé en ce qu'au moins une trémie de déchargement s'étend à travers une couronne de rotation (22) d'un système d'essieu et en ce que le conduit de sortie commun (85) s'étend à peu près dans le plan médian longitudinal du véhicule.

10. Un véhicule comme revendiqué dans la revendication 9, caractérisé en ce que le conduit de sortie commun (85) s'étend au-dessous de la couronne de rotation (22).

**Patentansprüche**

1. Fahrzeug (8) mit einem Chassis (2), dessen hinteres Ende (12) über eine drehbare Krone (21, 22, 130) von mindestens einer gelenkten Achsanordnung abgestützt ist, die mit Rädern versehen ist und mindestens ein Scharnier (53, 153) hat, mit dem einer Koppelstange (54, 154) eines Lenkmechanismus in Eingriff steht, wobei die Stange sich auf einem Niveau oberhalb der Räder (24, 134) und im wesentlichen in Längsrichtung des Fahrzeugs erstreckt, dadurch gekennzeichnet, daß das Scharnier (53, 153) an der Achsanordnung entlang einer seitlichen Seite des Fahrzeugs und in Draufsicht außerhalb der drehbaren Krone (21, 22, 130) angeordnet ist, und daß die Koppelstange sich teilweise über die Räder (24, 134) erstreckt.

2. Fahrzeug (8) nach Anspruch 1, dadurch gekennzeichnet, daß es in Form eines aufsattelbaren Anhängers (10) konstruiert ist und einen von der Zugmaschine gesteuerten Querhebel (51) aufweist, der am Chassis (2) so drehbar gelagert ist, daß er um eine vertikale Welle in der mittleren Längsebene des Anhängers schwenkbar ist, wobei der Hebel (51) bis in die Nähe mindestens einer Seite des Fahrzeugs reicht und an dieser Stelle an der Koppelstange (54, 154) angelenkt ist, die sich nach hinten zum Eingriffsscharnier (53, 153) erstreckt.

3. Fahrzeug nach Anspruch 2, dadurch gekennzeichnet, daß der Querhebel (51) über ein Lenkelement gesteuert ist, welches mit der Zugmaschine koppelbar ist und mit einer Gleitstange (50) schwenkbar in Eingriff steht, die gegenüber dem Querhebel (51) verschiebbar ist.

4. Fahrzeug nach einem der vorhergehenden Ansprüche, dadurch gekennzeichnet, daß das Eingriffsscharnier (53, 153) an einer Konsole (57, 157) angeordnet ist, die sich gegenüber einem Achsanordnungsrahmen (29, 131) nach oben und außen erstreckt.

5. Fahrzeug nach einem der vorhergehenden Ansprüche, dadurch gekennzeichnet, daß die Achsanordnung (124) zwei Achsen (133, 139) aufweist, daß die in normaler Fahrtrichtung hinterste Achse (139) eine Schwenkachse ist, und daß Lenkungseinrichtungen mit einer Lenkstange (179) zum Steuern der Schwenkachse (139) in Abhängigkeit vom Drehwinkel des Drehgestells (124) gegenüber dem Chassis vorgesehen sind (Fig. 16 und 17).

6. Fahrzeug nach Anspruch 5, dadurch gekennzeichnet, daß die Lenkstange (179) an einem Ende mit einem Punkt gekoppelt ist, der gegenüber dem Chassis an einem Ort (146) fixiert ist.

7. Fahrzeug nach einem der vorhergehenden Ansprüche, dadurch gekennzeichnet, daß das hintere Ende des in Form eines Anhängers konstruierten Fahrzeugs von mindestens zwei gelenkten Achsanordnungen (90, 13, 14) abgestützt ist, von denen die hinterste (14) zuerst von der Zugmaschine gelenkt wird und die vorderste Achsanordnung (90, 13) von der hintersten Anordnung über mindestens eine Koppelstange (61, 62), die die Achsanordnungen miteinander koppelt, gesteuert wird.

8. Fahrzeug nach einem der vorhergehenden Ansprüche, dadurch gekennzeichnet, daß das hintere Ende des in Form eines Anhängers konstruierten Fahrzeugs von mindestens zwei gelenkten Achsanordnungen abgestützt ist, die durch einen Zwischenhebel (1, 110) miteinander gekoppelt sind, welcher auf einem am Chassis fest angebrachten Lagerelement (5) drehbar gelagert ist.

9. Fahrzug nach einem der vorhergehenden Ansprüche mit einer Vielzahl von Kammern (84), die jeweils einen Entleerungstrichter (83) aufweisen, der in eine gemeinsame Abgabeleitung (85) mündet, dadurch gekennzeichnet, daß sich mindestens ein Entleerungstrichter (83) über eine drehbare Krone (22) einer Achsanordnung hinweg erstreckt, und daß die gemeinsame Abgabeleitung (85) sich im wesentlichen in der mittleren Längsebene des Fahrzeugs erstreckt.

10. Fahrzeug nach Anspruch 9, dadurch gekennzeichnet, daß sich die gemeinsame Abgabeleitung (85) unterhalb der drehbaren Krone (22) erstreckt.

FIG.1

FIG.2

FIG.4

FIG.3

FIG.5

FIG.6

FIG.7

FIG.8

FIG.9

FIG.10

FIG. 11

FIG. 12

FIG. 13

FIG. 14

FIG.15

FIG.16

FIG.17

## FIG. 18